(19) Europäisches Patentamt
European Patent Office
Office européen des brevets

(11) **EP 1 127 934 B1**

(12) **EUROPEAN PATENT SPECIFICATION**

(45) Date of publication and mention of the grant of the patent:
**31.12.2008 Bulletin 2009/01**

(51) Int Cl.:
***C09J 153/00*** *(2006.01)* ***C08F 293/00*** *(2006.01)*
***C09J 7/02*** *(2006.01)*

(21) Application number: **01104745.3**

(22) Date of filing: **26.02.2001**

(54) **Ultraviolet crosslinking pressure-sensitive adhesive composition, process for producing same, pressure-sensitive adhesive sheet and process for producing same**

Druckempfindliche mit ultravioleter Strahlung vernetzbare Klebstoffzusammensetzung, Verfahren zu ihrer Herstellung, druckempfindliche Klebefolie und Verfahren zu ihrer Herstellung

Composition adhésive sensible à la pression réticulable à l' ultraviolet, son procédé de préparation, feuille adhésive sensible à la pression et son procédé de préparation

(84) Designated Contracting States:
**DE FR GB**

(30) Priority: **28.02.2000 JP 2000056002**
**28.08.2000 JP 2000256670**
**21.11.2000 JP 2000354244**

(43) Date of publication of application:
**29.08.2001 Bulletin 2001/35**

(73) Proprietor: **NITTO DENKO CORPORATION**
**Osaka (JP)**

(72) Inventors:
- **Doi, Tomoko, c/o Nitto Denko Corporation Ibaraki-shi, Osaka (JP)**
- **Moroishi, Yutaka, c/o Nitto Denko Corporation Ibaraki-shi, Osaka (JP)**
- **Yamamoto, Michiharu, c/o Nitto Denko Corporation Ibaraki-shi, Osaka (JP)**
- **Kawaguchi, Yoshihide, c/o Nitto Denko Corporation Ibaraki-shi, Osaka (JP)**
- **Nakano, Fumiko, c/o Nitto Denko Corporation Ibaraki-shi, Osaka (JP)**

(74) Representative: **Grünecker, Kinkeldey, Stockmair & Schwanhäusser Anwaltssozietät Leopoldstrasse 4 80802 München (DE)**

(56) References cited:
**EP-A- 0 660 187**
**US-A- 4 329 384**
**US-A- 4 894 259**
**US-A- 5 908 695**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 127 934 B1

## Description

### FIELD OF THE INVENTION

This invention relates to an ultraviolet crosslinking pressure-sensitive adhesive composition using a block copolymer and a process for producing the composition, and to a pressure-sensitive adhesive sheet using the ultraviolet crosslinking pressure-sensitive adhesive composition and a process for producing the sheet.

### BACKGROUND OF THE INVENTION

In recent years, solvent type, emulsion type or hot melt type pressure-sensitive adhesives have been used in the field where simple contact adhering is required, such as pressure-sensitive adhesive tapes for packaging, pressure-sensitive adhesive tapes for masking upon painting, pressure-sensitive adhesive tapes for medical uses, pressure-sensitive adhesive tapes for sanitary goods, pressure-sensitive adhesives for fixing disposable paper diapers and pressure-sensitive adhesive labels.

As the solvent type pressure-sensitive adhesives, there have been known rubber type or acrylic ones but, in recent years , it has been desired to minimize the amount of solvents to be used in view of drying efficiency, energy saving and working atmosphere. To reduce the amount of the solvent upon production of polymers for serving the desire would involve difficulty in controlling heat generated by the polymerization, thus being problematical in safety. Emulsion type pressure-sensitive adhesives wherein polymer particles are dispersed in water require a step of finally removing water upon formation of the pressure-sensitive adhesive layer, thus being also problematical in view of drying efficiency and energy saving.

In comparison with the solvent type or emulsion type pressure-sensitive adhesives, hot melt type pressure-sensitive adhesives are excellent in view of safety and production cost, and there have been known, for example, those which contain a styrene-isoprene block copolymer as a major component. This type of pressure-sensitive adhesives, however, generally have such a poor weatherability that they cause problem of malfunction with time of products using them. Thus, it has been tried to introduce acrylic polymer component, generally known to have good weatherability, in place of the isoprene polymer component causing deterioration of weatherability, to thereby obtain pressure-sensitive adhesives causing no problems described above.

However, although there have been some examples of using randam copolymers between acrylic monomer and styrenic monomer, which can be synthesized with ease, as a major component of adhesives, no pressure-sensitive adhesives have been obtained that show satisfactory pressure-sensitive adhesive property. On the other hand, block copolymers with styrenic polymer component and acrylic polymer component can not have been obtained with ease even by employing any polymerization process of radical polymerization process, anion polymerization process and cation polymerization process, and thus there have been no examples of using the block copolymers as a major component of pressure-sensitive adhesives.

### SUMMARY OF THE INVENTION

Under these circumstances, the present invention provides a pressure-sensitive adhesive composition and a pressure-sensitive adhesive sheet using the pressure-sensitive adhesive, which do not cause economical problems as are caused by the conventional emulsion type pressure-sensitive adhesives, i.e., problem with drying efficiency for removing water and problem of saving of energy, and which can improve weatherability based on introduction of the acrylic polymer component and, in addition, exhibit improved pressure-sensitive adhesive property.

As a result of intensive investigations to attain the objects, the inventors have found that, by the process of subjecting a styrenic monomer and an acrylic monomer to living radical polymerization using a specific activating agent and a polymerization initiator, there can be produced with ease block copolymers wherein styrenic plymer block A and acrylic polymer block B are bound to each other such as A-B or A-B-A, which can not have been synthesized by conventional processes, in the absence, or in the presence of a small amount, of a solvent without causing problems with safety such as difficult control of heat generated upon polymerization, and that an ultraviolet crosslinking pressure-sensitive adhesive composition prepared by mixing the thus-produced block copolymer with a specific photoinitiator can exhibit the effect of improving essential weatherability based on the acrylic polymer and, in addition, improved pressure-sensitive adhesive property without causing economical problems as are caused by the conventional emulsion type pressure-sensitive adhesives, and can provide a pressure-sensitive adhesive sheet having the pressure-sensitive adhesive composition, thus having completed the invention based on the findings.

That is, the invention relates to (1) an ultraviolet crosslinking pressure-sensitive adhesive composition, which is produced by mixing a block copolymer (a) wherein at least one styrenic polymer block A and at least one acrylic polymer block B are bound to each other with a triazine derivative (b) containing trichloromethyl group; particularly (2)

the ultraviolet crosslinking pressure-sensitive adhesive composition as in (1), wherein the block copolymer (a) is an A-B, B-A, A-B-A or B-A-B block copolymer; (3) the ultraviolet crosslinking pressure-sensitive adhesive composition as in (1) or (2), wherein the block copolymer (a) contains not more than 50 % by weight of the styrenic polymer block A based on the total amount of the block copolymer; (4) the ultraviolet crosslinking pressure-sensitive adhesive composition as in (1) to (3), wherein the block copolymer (a) contains a hydroxyl group or groups in its polymer chain; (5) the ultraviolet crosslinking pressure-sensitive adhesive composition as in (4), wherein the hydroxyl group(s) exist(s) at the end, or in the vicinity of the end, of the polymer chain; (6) the ultraviolet crosslinking pressure-sensitive adhesive composition as in (1) to (3), wherein the block copolymer (a) contains carboxyl precursor groups in the acrylic polymer block B; and (7) the ultraviolet crosslinking pressure-sensitive adhesive composition as in (6) , wherein the carboxyl precursor groups are converted to carboxyl groups.

In addition, the invention relates to (8) a process for producing the ultraviolet crosslinking pressure-sensitive adhesive composition, which comprises conducting living radical polymerization of a styrenic monomer and an acrylic monomer in a proper order of the monomers using a polymerization initiator in the presence of a transition metal and its ligand to produce a block copolymer (a) wherein at least one styrenic polymer block A and at least one acrylic polymer block B are bound to each other, and mixing the block copolymer with a triazine derivative (b) containing trichloromethyl group; and particularly (9) the process for producing the ultraviolet crosslinking pressure-sensitive adhesive composition as in (8), wherein the block copolymer (a) has the carboxyl precursor groups in the acrylic polymer block B, and the carboxyl precursor groups are converted to carboxyl groups, before or after being mixed with the triazine derivaticve (b) containing trichloromethyl group, by heating in the presence of an acid catalyst.

Further, the invention relates to (10) a pressure-sensitive adhesive sheet, which comprises a backing having provided thereon a pressure-sensitive adhesive layer containing not more than 50 % by weight of solvent-soluble matter formed by ultraviolet crosslinking the ultraviolet crosslinking pressure-sensitive adhesive composition described in (1) to (7); and (11) a process for producing the pressure-sensitive adhesive sheet, which comprises applying to a backing the ultraviolet crosslinking pressure-sensitive adhesive composition described in (1) to (7), and causing crosslinking of the composition by ultraviolet irradiation to form a pressure-sensitive adhesive layer containing not more than 50 % by weight of solvent-soluble matter. Additionally, in the invention, the term " pressure-sensitive adhesive sheet" includes not only pressure-sensitive adhesive sheets usually having a wide width but pressure-sensitive adhesive tapes usually having a narrow width and, in addition, includes other various pressure-sensitive adhesive products such as pressure-sensitive adhesive labels.

## DETAILED DESCRIPTION OF THE INVENTIOIN

As to the living radical polymerization process, there are known, for example, (1) the report by Patten, et al., entitled "Radical Polymerization Yielding Polymers with Mw/Mn ~1.05 by Homogeneous Atom Transfer Radical Polymerization" (Polymer Preprinted, pp. 575 to 576, No.37 (March 1996)), (2) the report by Matyjasewski, et al., entitled "Controlled/Living Radical Polymerization. Halogen Atom Transfer Radical Polymerization Promoted by a Cu(I)/Cu(II) Redox Process" (Macromolecules, 1995, 28, 7901 to 7910 (October 15, 1995)), (3)PCT/US96/03302 by Matyjasewski et al., International Publication No. WO96/30421 (October 3, 1996); and (4) the report by M.Sawamoto et al., entitled "Ruthenium-mediated Living Radical polymerization of Methyl Methacrylate" (Macromolecules, 1996, 29,1070).

Noting the recently found, living radical polymerization process, the inventors have found that a block copolymer wherein at least one styrenic polymer block A and at least one acrylic polymer block B are bound to each other can be easily produced by conducting living radical polymerization of styrenic monomer and acrylic monomer in a proper monomer order using a polymerization initiator in the presence of a transition metal and its ligand as activating agents.

As the transition metal, there are Cu, Ru, Fe, Rh, V and Ni and, usually, a proper one is selected from among halides (such as chlorides or bromides) of these metals to use. The ligand forms a coordination bond or bonds with the central transition metal to form a complex, and there may favorably be used, for example, bipyridyl derivatives, mercaptan derivatives and trifluorate derivatives. Of the combinations of the transition metal and its ligand, $Cu^{+1}$-2,2'-bipyridyl complex is the most preferable combination in view of stability and rate of polymerization.

As the polymerization initiators, ester or styrene derivatives having a halogen atom at $\alpha$-position thereof are preferred, with 2-bromo (or chloro) propionic acid derivatives and chloro(or bromo) 1-phenyl derivatives being particularly preferably used. Specifically, as monofunctional initiators having only one bromine or chlorine atom within the molecule, there are illustrated methyl 2-bromo(or chloro)propionate, ethyl 2-bromo(or chloro)propionate, methyl 2-bromo(or chloro) -2-methylpropionate, ethyl 2-bromo(or chloro)-2-methylpropionate and chloro(or bromo)-1-phenylethyl. As bifunctional initiators having two bromine or chlorine atoms within the molecule, there are illustrated ethylene bis(2-bromo-2-methylpropionate).

In the invention, styrenic monomers such as styrene, $\alpha$-methylstyrene, 2,4-dimethylstyrene and 4-methoxystyrene are used as the polymerizable monomer of styrenic monomer . The acrylic monomer is mainly an alkyl (meth) acrylate represented by the general formula (1) of $CH_2=CR^1COOR^2$ (wherein $R^1$ represents a hydrogen atom or a methyl

group, and $R^2$ represents an alkyl group containing 2 to 14 carbon atoms). Of these, those (meth) acrylates which have 4 to 12 carbon atoms , such as n-butyl (meth)acrylate, hexyl (meth)acrylate, 2-ethylhexyl (meth)acrylate, isooctyl (meth) acrylate and isononyl (meth)acrylate are preferred.

Additionally, the acrylic monomer to be used with a main monomer may be used in combination with a copolymerizable monomer for modification in an amount of not more than 40 % by weight, preferably not more than 30 % by weight, more preferably not more than 20 % by weight, of the total amount of the acrylic monomers. As such monomers for modification, there are illustrated (meth) acrylamide, mono- or di-esters of maleic acid, glycidyl (meth)acrylate, N,N-dimethylaminoethyl (meth)acrylate, N,N-dimethylaminopropyl (meth)acrylate, N-vinylpyrrolidone, acrylonitrile and (meth) acryloyl-morpholine.

In the living radical polymerization process, A-B type block copolymers can be produced, for example, by first polymerizing the styrenic monomer using a monofunctional initiator, then adding thereto the acrylic monomer to continue polymerization of the acrylic monomer. In case where the styrenic monomer is again added, after completion of the polymerization of the acrylic monomer, to continue polymerization of the styrenic monomer, there can be produced A-B-A type block copolymers. Further, by reversing the order of the polymerization steps, block copolymers with an optional structure such as B-A or B-A-B can be produced. In case where such successive polymerization is conducted, next monomer be preferably added at the point when conversion of the previous monomer exceeds at least 60 % by weight, preferably when the conversion becomes 70 % by weight or more, more preferably 80 % by weight or more. Thus, adhesion and cohesion can be well balanced.

In addition, in case where block polymers of, for example, A-B-A type are to be obtained by using a bifunctional initiator, it suffices that an acrylic monomer is first polymerized to produce an acrylic polymer, then a styrenic monomer is added thereto and polymerization of the added monomer is continued to produce styrenic polymer block A on both sides of the polymer block B. In comparison with the process of using a monofunctional initiator, this process of using the bifunctioanl initiator provides an A-B-A block copolymer by two-stage polymerization operation, thus being more advantageous in view of production steps. In this process, too, it is preferred to add the next styrenic monomer at the point where conversion of the previous acrylic monomer exceeds at least 60 % by weight, usually becomes 70 % by weight or more, preferably 80 % by weight or more.

Additionally, in case where the resulting copolymer has two acrylic polymer blocks B within the molecule, such as the B-A-B block copolymers, each polymer block B may be constituted by polymer blocks different in monomer composition, such as polymer block B1 and polymer block B2. In this case, the order of monomer in living radical polymerization may be changed, as long as the difference in properties between the monomer compositions is distinct, to produce block copolymers composed of three or more blocks wherein the styrenic polymer block A and the acrylic polymer block B are not necessarily alternatingly bound to each other like an A-B1-B2 block copolymer. At the same time, with block copolymers having two or more styrenic polymer blocks A within the molecule such as A-B-A block copolymers , each polymer block A may be constituted by polymer blocks A1, A2, etc. being different in monomer composition. In this case, too, the bonding order described above may be employed.

In the living radical polymerization, the polymerization initiator is used in a proportion of usually 0.01 to 10 mols, preferably 0.1 to 5 mols %, based on the whole polymerizable monomers. The transition metal is used in a proportion of usually 0.01 to 3 mols, preferably 0.1 to 1 mol, per mol of the polymerization initiator, in the form of halide or the like. In addition, its ligand is used in a proportion of usually 1 to 5 mols, preferably 2 to 3 mols, per mol of the transition metal (in the form of halide or the like). Such proportions of the polymerization initiator and the activating agent provide favorable results as to reactivity of the living radical polymerization and molecular weight of the resulting polymer.

The living radical polymerization may proceed in the absence of a solvent or in the presence of a solvent such as butyl acetate, toluene or xylene. In case where a solvent is used, it is preferred to use the solvent in an amount so that the solvent concentration after completion of the polymerization may be 50 % by weight or less for preventing reduction of polymerization rate. Polymerization in the absence of a solvent or in the presence of a small amount of a solvent does not involve safety problems such as control of polymerization heat and, rather, decrease in the amount of the solvent serves to provide good results in veiw of economy and measures against environmental problems. As to polymerization conditions, it suffices to employ a polymerization temperature of 70 to 130°C from the point of polymerization rate or deactivation of the catalyst, and a polymerization time of from about 1 to about 100 hours depending upon the final molecular weight or polymerization temperature.

The thus produced block copolymers have a structure of, for example, A-B block copolymers wherein the styrenic polymer block A forms a starting point to which the acrylic polymer block B is bound, or A-B-A block copolymers wherein the styrenic polymer block A forms a starting point to which the acrylic polymer block B and the styrenic polymer block A are successively bound. The block copolymers wherein at least one styrenic polymer block A and at least one acrylic polymer block B are bound to each other as described above show microdomain structure as is seen with generally used styrene-isoprene-styrene block copolymers. This microdomain structure seems to be the cause of imparting excellent pressure-sensitive adhesive property providing satisfactory adhesion and cohesion.

In the block copolymers wherein at least two differene blocks are bound to each other, proportion of the styrenic

polymer block A is preferably not more than 50 % by weight, particularly preferably 5 to 40 % by weight, of the total amount of the block copolymer. In case where proportion of the styrenic polymer block A is too much, there results a polymer not having a visco-elasticity required for pressure-sensitive adhesive and being too hard as pressure-sensitive adhesive and, in case where too little, there results a polymer having a poor cohesion as a pressure-sensitive adhesive.

As to molecular weight of the block copolymers , those with a number average molecular weight of from 5,000 to 500,000, particularly preferably from 10,000 to 200,000, are preferred in view of pressure-sensitive adhesive property and coating property. The phrase, number average molecular weight, means a value determined in terms of polystyrene according to GPC (Gel Permeation Chromatography).

The block copolymer (a) to be used in the present invention may have a hydroxyl group or groups in the polymer chain. Such block copolymers having hydroxyl groups may easily be produced by using a polymerization initiator having a hydroxyl group or groups within the molecule, by using as one of the polymerizable monomers a monomer having a hydroxyl group or groups within the molecule, or by the combination thereof. With the block copolymers having hydroxyl groups on the polymer chain, in particular at the end, or in the vicinity of the end, of the polymer chain, the hydroxyl groups can effectively be utilized as crosslinking points in case where more cohesion is required as pressure-sensitive adhesive.

The hydroxyl group can be introduced at the starting end of the polymer by using a polymerization initiator having a hydroxyl group within the molecule. As such polymerization initiators, there can be illustrated esters or styrenic derivatives having halogen at the α-position, such as 2-hydroxyethyl 2-bromo(or chloro)propionate, 4-hydroxybutyl 2-bromo(or chloro)propionate, 2-hydroxyethyl 2-bromo(or chloro)-2-methylpropionate and 4-hydroxybutyl 2-bromo(or chloro)-2-methylpropionate.

Use of a monomer having a hydroxyl group within the molecule enables introduction of the hydroxyl group at controlled optional positions of the polymer chain by selecting the point of the addition of this monomer. As such monomers, hydroxyalkyl (meth)acrylates represented by the formula (2) of $CH_2=CR^3COOR^4$ (wherein $R^3$ represents a hydrogen atom or a methyl group, and $R^4$ represents an alkyl group having at least one hydroxyl group and 2 to 6 carbon atoms) are used. Specific examples thereof include 2-hydroxyethyl (meth)acrylate, 3-hydroxypropyl (meth)acrylate, 4-hydroxybutyl (meth)acrylate and 6-hydroxyhexyl (meth)acrylate. These monomers having a hydroxyl group or groups within the molecule are used in an amount of not more than 10 % by weight, preferably not more than 5 % by weight, of the total weight of the polymerizable monomers.

Combined use of the polymerization initiator having a hydroxyl group within the molecule and the monomer having a hydroxyl group or groups within the molecule enables production of a block copolymer having hydroxyl groups at the both ends, or in the vicinity of the both ends , of the polymer chain. For example, with A-B block copolymers, addition of the monomer having a hydroxyl group or groups within the molecule at the point when conversion of the second stage acrylic monomer becomes at least 80 % by weight enables introduction of the hydroxyl group of the monomer at the stopping end, or in the vicinity, of the polymer chain. Thus, two or more hydroxyl groups (one derived from the monomer having a hydroxyl group or groups within the molecule and the other from the polymerization initiator located at the initiating end of the polymer chain) are telechelically introduced into the block copolymer.

In the invention, the block copolymer (a) desirably has carboxyl groups in the polymer chain, because the carboxyl groups serve to provide good results with respect to adhesion to various adherends, particularly to metal plates such as SUS plates, owing to the hydrogen bonding force. However, such block copolymers having carboxyl groups can not be produced directly by the living radical polymerization process. This may be because carboxyl groups deactivate the activating agent of transition metal.

As a result of intensive investigations to overcome this problem, the inventors have found that block copolymers having carboxyl groups in the acrylic polymer block B can easily be produced by using, as one of the acrylic monomers of one of the polymerizable monomers, a monomer having a carboxyl precursor group or groups within the molecule in the living radical polymerization process to thereby produce a block copolymer having the carboxyl precursor group or groups in the acrylic polymer block B, and converting the carboxyl group or groups in the acrylic polymer block B.

As the monomer having the carboxyl precursor group(s) within the molecule, those monomers suffice which have a carboxyl precursor group or groups that does not deactivate the activating agent of transition metal during polymerization and, after completion of the polymerization can be decomposed with an acid catalyst to generate a free carboxyl group. Such monomers include t-butyl (meth)acrylate and trimethylsilyl (meth)acrylate, with t-butyl (meth) acrylate being particularly preferably used. Additionally, use of a monomer having a carboxyl group within the molecule such as (meth) acrylic acid in place of the above-described monomer fail to sufficiently compete the living radical polymerization.

The monomers having the carboxyl precursor group(s) within the molecule are used in an amount of not more than 30 % by weight, particularly preferably not more than 25 % by weight (usually not less than 1 % by weight), of the acrylic monomers so that the carboxyl group-containing unit in the acrylic polymer block B having been subjected to the conversion treatment can exist in about the same amount. In case where the amount is too much, there results a hard polymer which is liable to cause such troubles as failing to show a necessary tack as a pressure-sensitive adhesive.

Living polymerization process using, as one of the acrylic monomers, the monomer having a carboxyl precursor group or groups is the same as has been described hereinbefore, and respective monomers may be polymerized in successive depending upon the types of resulting copolymers of A-B, B-A, A-B-A, B-A-B, etc.

As is described above, block copolymers having a carboxyl precursor group or groups in the acrylic polymer block B by the living radical polymerization are produced, then the precursor group or groups are converted to carboxyl group or groups. The conversion process is not particularly limited but, usually, it is preferably employed to heat-treat in the presence of an acid catalyst. As such process, there are illustrated, for example, the following processes (i) to (iv):

(i) a process of adding $H^+$ ion-exchange resin such as sulfonic acid-type ion exchange resin to the block copolymer in an amount of usually 0.1 to 20 parts by weight, preferably 1 to 10 parts by weight, per 100 parts by weight of the copolymer, and heat-treating the mixture (if necessary, the block copolymer may be diluted with an organic solvent such as toluene in order to facilitate the reaction.);
(ii) a process as described in (i) wherein an organic acid such as p-toluenesulfonic acid or benzenesulfonic acid is used in place of the $H^+$ ion-exchange resin, in an amount of 0.1 to 20 parts by weight, preferably 1 to 5 parts by weight, per 100 parts by weight of the copolymer;
(iii) a process of adding an inorganic acid such as hydrochloric acid or sulfuric acid to the block copolymer in an amount of usually 0.1 to 20 parts by weight, preferably 1 to 5 parts by weight, per 100 parts by weight of the copolymer, and heat-treating the mixture (if necessary, the block copolymer may be diluted with a water-miscible organic solvent such as tetrahydrofuran or dioxane.); and
(iv) a process of adding a photoacid generator to the block copolymer, irradiating with ultraviolet to generate B1 ϕ nsted acid as acid catalyst, then heat-treating it.

As the photoacid generator to be used in the process (iv), diazonium salts, sulfonium salts and iodonium salts represented, respectively, by $ArN_2^+Q^-$, $Y_3S^+Q^-$ and $Y_2I^+Q^-$ (wherein Ar represents an aryl group such as a bis (dodecylphenyl) group, Y represents an alkyl group or the same aryl group as described above, and $Q^-$ represents a non-basic and nucleophilic anion such as $BF_4^-$, $PF_6^-$,$AsF_6^-$, $SbF_6^-$, $SbCl_6^-$, $HSO_4^-$ and $Cl^-$) are preferably used.

Specifically, there are illustrated bis(dodecylphenyl)iodonium·hexafluoroantimonate, bis(t-butylphenyl)-iodonium·hexafluorophosphate bis(t-butylphenyl)-iodonium·trifluoromethanesulfonate, triphenylsulfonium·trifluoromethanesulfonate, biphenyliodonium·trifluoromethanesulfonate, phenyl-(3-hydroxy-pentadecylphenyl)-iodonium-hexafluoroantimonate, and compounds containing these ingredients. In addition, various mixtures containing the above-described ingredients, such as a chemical product of "UV-9380C" manufactured by Toshiba Silicone Co., Ltd. containing 45 % by weight of bis(dodecylphenyl)-ionoonium·hexafluoroantimonate based on the total weight of the chemical product, may also be used. These photoacid generators are used in an amount of usually 0.01 to 20 parts by weight, preferably 0.1 to 2 parts by weight, per 100 parts by weight of the block copolymer. In case where they are used in a smaller amount, they provide only insufficient reactivity, whereas in an excess amount, there result disadvantages in economy and poor pressure-sensitive adhesive properties.

In any of the processes (i) to (iv), the heating temperature to be employed in the presence of the acid catalyst is usually 50°C or higher and, particularly, processes (i) to (iii) permit to select the heating temperature in the range of from 50°C to the reflux temperature of a diluent solvent. However, a too high heating temperature would possibly decompose even ester portion of alkyl (meth) acrylate which is the main monomer constituting the acrylic polymer block B. Thus, in any of the processes, the heating temperature be desirably not higher than 140°C, with 80 to 140°C being particularly desirable to select.

Additionally, the conversion to carboxyl group may be carried out either before or after mixing with the trichloromethyl group-containing triazine derivative (b) to be described hereinafter. In the processes (i) to (iii), the conversion is preferably conducted before the mixing. In the process (iv), conversion may be conducted either before or after the mixing. In case where the conversion is conducted before the mixing, ultraviolet irradiation is conducted after adding the photoacid generator to thereby generate an acid catalyst composed of B1 ϕnsted acid and the heat treatment is conducted. This ultraviolet irradiation may be conducted in the same manner as in the treatment of crosslinking with ultraviolet irradiation to be conducted after mixing with the component (b) to be described hereinafter. In case where the conversion is conducted after the mixing, it is preferably conducted usually after applying the mixture to a backing. That is, a pressure-sensitive adhesive sheet having provided on a backing a pressure-sensitive adhesive layer crosslinked with a trichloromethyl group-containing triazine derivative can be prepared through one operation, by mixing the block copolymer with both the photoacid generator and the trichloromethyl group-containing triazine derivative (b), coating the mixture on a backing, irradiating it with ultraviolet, and heat-treating it.

Further, the conversion of the carboxyl precursor groups in the acrylic polymer block B to carboxyl groups can be confirmed by instrumental analysis such as IR (Infrared absorption spectrum) or $^{13}$C-NMR (Nuclear Magnetic Resonance spectrum). The eliminating group formed by decomposition of the precursor moiety, such as t-butyl group, flies out of the reaction system as an isobutene gas or the like, and hence there is no possibility of the decomposite mixing

into the converted polymer as a residue.

In the invention, it is intended to constitute ultraviolet crosslinking pressure-sensitive adhesive composition by using the block copolymer (a) which has a hydroxyl group or groups in the polymer chain or which has a carboxyl precursor group or carboxyl group formed from the precursor group in the acrylic polymer block B as a major component, and mixing it with the trichloromethyl group-containing triazine derivative (b) as a photoinitiator.

As the trichloromethyl group-containing triazine derivative (b), there are illustrated 2-(p-methoxyphenyl)-4,6-bis(trichloromethyl)-s-triazine, 2-phenyl-4,6-bis(trichloromethyl)-s-triazine, 2-(4'-methoxy-1'-naphthyl)-4,6-bis(trichloromethyl)-s-triazine, 2,4-trichloromethyl-(4'-methoxyphenyl)-6-triazine, 2,4-trichloromethyl-(4'-methoxynaphthyl)-6-triazine, 2,4-trichloromethyl (piperonyl)-6-triazine and 2,4-trichloromethyl(4'-methoxystyryl)-6-triazine.

The trichloromethyl group-containing triazine derivative is used in an amount of usually 0.1 to 5 parts by weight, preferably 0.4 to 1 part by weight, per 100 parts by weight of the block copolymer (a). In case where the trichloromethyl group-containing triazine derivative is used in an amount of less than 0.1 part by weight, there results a poor ultraviolet crosslinkability whereas, more than 5 parts by weight, favorable pressure-sensitive adhesion properties can not be obtained.

In the invention, benzophenone derivatives (such as benzophenone or its derivative) may further be mixed as a crosslinking aids together with the photoinitiator. Mixing of the crosslinking aid serves to more rapidly crosslink the surface, whereby prevention with oxygen of the crosslinking reaction in the surface can be depressed and uniform crosslinking can be attained in a depthwise direction, thus adhesion properties being more improved. The benzophenone derivative is used in an amount of usually 0.1 to 3 parts by weight, preferably 0.5 to 1 part by weight, per 100 parts by weight of the block copolymer.

In addition to the block copolymer (a), the trichloromethyl group-containing derivative (b) and, preferably, the benzophenone derivative, the ultraviolet crosslinking pressure-sensitive adhesive composition of the invention may contain, if necessary, various additives having been compounded in general pressure-sensitive adhesive compositions, such as tackifiers, fillers, antioxidants, pigments, photosensitizers and photoactivators. These various additives are used in usual amounts not spoiling the advantages of the invention.

The ultraviolet crosslinking pressure-sensitive adhesive composition of the invention is finally ultraviolet crosslinked to conduct both chain extension and crosslinking of block copolymer (a) at the same time to produce a crosslinked polymer having an extended molecular chain, which can exhibit excellent pressure-sensitive adhesion properties providing sufficient adhesion and cohesion. In this situation, it is preferred to control the content of the solvent-soluble matter of the block copolymer to not more than 50 % by weight, preferably not more than 45 % by weight, usually 20 to 40 % by weight. In order to attain such content of the solvent-soluble matter, it suffices to properly adjust the degree of crosslinking by selecting the amount of the photoinitiator (b) or the amount of ultraviolet irradiation.

The pressure-sensitive adhesive sheet of the invention is in a form such as tape or sheet formed by providing, on one or both sides of a backing, a pressure-sensitive adhesive layer of the ultraviolet crosslinking pressure-sensitive adhesive composition in a thickness of usually 10 to 100 μm per side and crosslinking as described above, said pressure-sensitive adhesive layer containing not more than 50 % by weight of the solvent soluble matter. As the backing, paper, plastic-laminated paper, cloth, plastic-laminated cloth, plastic film, metal foil, foam, etc. are used. In addition, the films and papers may be used after being subjected to releasing treatment on the one side or both sides thereof.

In the invention, the pressure-sensitive adhesive sheet may be produced by applying the ultraviolet crosslinking pressure-sensitive adhesive composition to one side or both sides of the backing and, if necessary after drying, irradiating with ultraviolet to crosslink the composition to form a pressure-sensitive adhesive layer having the thickness and the content of solvent soluble matter in the above-mentioned ranges. Upon applying the pressure-sensitive adhesive composition to the backing, the composition may, if necessary, be heated to apply in a state of decreased viscosity. Specifically, a hot-melt coater, a comma roll coater, a gravure coater, a roll coater, a kiss coater, a slot die coater or a squeeze coater may be used.

The crosslinking treatment by ultraviolet irradiation may be conducted by using a proper ultraviolet source such as a high-pressure mercury lamp, a low-pressure mercury lamp, an exima laser or a metal halide lamp. As the amount of ultraviolet irradiation, a proper amount can be selected depending upon the necessary crosslinking degree and is desirably selected within the range of from 50 mj to 5 J/cm$^2$. Use of a filter, Pyrex glass or polyester sheet capable of cutting 95 % or more ultraviolet of shorter wavelengths, preferably not longer than 300 nm, enables one to uniformly conduct crosslinking of the pressure-sensitive adhesive sheet, whereby excellent adhesion and cohesion can be obtained. Further, temperature upon irradiation with ultraviolet is not particularly limited, and a proper temperature can be properly selected in the range of from room temperature to 140°C.

The invention is described more specifically by reference to Examples.

Additionally, A-B block copolymer samples (1) to (5) and A-B-A block copolymer samples (6) to (8) used in Examples 1 to 11 are those obtained according to the following Preparation Examples 1 to 8. A-B block copolymer sample (9) having the carboxyl precursor groups, B-A block copolymer sample (10) having the carboxyl precursor groups , and A-B-A block copolymer sample (11) having the carboxyl precursor groups, and used in Examples 12 to 18

are those obtained according to the following Preparation Examples 9 to 11.

In each of the Preparation Examples, most of the starting materials are commercially available, but 2-hydroxyethyl 2-bromo-2-methylpropionate (hereinafter referred to as 2-H2MPN) having a hydroxyl group and ethylene bis(2-bromo-2-methylpropionate) (hereinafter referred to as EBMP), used as polymerization initiator having a hydroxyl group, were synthesized according to the following processes.

<Synthesis of 2-H2MPN>

An excess amount of 44 ml (788 mmols) of ethylene glycol, 100 ml (717 mmols) of trimethylamine and 20 ml (200 mmols) of pyridine were placed in a reaction vessel, and 800 ml of acetone and 150 g (652 mmols) of 2-bromoisobutyryl bromide were added thereto under cooling in an ice bath for depressing exothermic reaction. After reacting for 20 hours, the precipitate was filtered off, 1 liter of ethyl acetate and 500 ml of an aqueous solution saturated with common salt were added thereto, then well shaked. After leaving to stand for a while, the upper ethyl acetate layer was washed twice with dilute hydrochloric acid, then thrice with 500 ml of an aqueous solution saturated with common salt, and dried over anhydrous magnesium sulfate. After removing magnesium sulfate, ethyl acetate was distilled off under reduced pressure to obtain a crude product. The thus obtained crude product was purified according to distillation method (87 to 90°C /0.25 mmHg) to obtain the end product of 2-H2MPN. Yield was 88 g (64 % by weight).

<Synthesis of EBMP>

12 ml (215 mmols) of anhydrous ethylene glycol and 10 ml (100 mmols) of pyridine were placed in a reaction vessel, and 350 ml of acetone and 75 g (326 mmols) of 2-bromo-2-methylpropionic acid bromide were added thereto under cooling in an ice bath for depressing exothermal reaction. After reacting for 20 hours , the precipitate was filtered off, 1 liter of ethyl acetate and 500 ml of an aqueous solution saturated with common salt were added thereto, then well shaked. After leaving to stand for a while, the upper ethyl acetate layer was washed twice with dilute hydrochloric acid, then thrice with 500 ml of an aqueous solution saturated with common salt, and dried over anhydrous magnesium sulfate. After removing magnesium sulfate, ethyl acetate was distilled off under reduced pressure to obtain a crude product. The thus obtained crude product was purified according to silica gel chromatography (developing solvent: mixed solvent of ethyl acetate/hexane=1/1) to obtain the end product of EBMP. Yield of EBMP was 52 g (67 % by weight).

## PRODUCTION EXAMPLE 1

273 g (2.63 mols) of styrene was placed in a 4-necked flask equipped with a mechanical stirrer, a nitrogen inlet, a cooling tube and a rubber septum, and 12.3 g (78.8 mmols) of 2,2'-bipyridine was added thereto, then the atmosphere inside the reaction system was replaced with nitrogen . Then, 3.76 g (26.2 mmols) of copper bromide was added thereto in nitrogen atmosphere, and the reaction system was heated to 90°C. 5.54 g (26.2 mmols) of 2-H2MPN was added thereto as a polymerization initiator to initiate polymerization, which was continued for 12 hours at 90 °C in nitrogen atmosphere with no solvents. After confirming that the conversion (value obtained by deviding the weight of polymer after removing volatiles through heating by the weight of polymer solution as such before removing the volatiles; hereinafter the same) reached 80 % by weight or more, 1,090 g (8.54 mols) of n-butyl acrylate was added through the rubber septum, followed by heating for further 20 hours. After confirming again that the conversion reached 80 % by weight or more, 6.78 g (39.4 mmols) of 6-hydroxyhexyl acrylate (hereinafter referred to as 6-HHA) was added thereto, followed by polymerization for 20 hours. The thus obtained polymer product was diluted with ethyl acetate to about 20 % by weight, and the catalyst was removed. Finally, ethyl acetate was distilled off, and the residue was heated (60°C) under reduced pressure to obtain A-B block copolymer sample (1) having hydroxyl groups at both ends of the molecule. This block copolymer sample (1) had a number average molecular weight of 48,000.

## PRODUCTION EXAMPLE 2

A-B block copolymer sample (2) having hydroxyl groups at both ends of the molecule was obtained in the same manner as in Production Example 1 except for changing the amount of 6-HHA to 26.3 mmols. This block copolymer sample (2) had a number average molecular weight of 44,000.

## PROCUCTION EXAMPLE 3

A-B block copolymer sample (3) having hydroxyl groups at both ends of the molecule was obtained in the same manner as in Production Example 1 except for using 1,560 g (8.54 mols) of 2-ethylhexyl acrylate in place of 1,090 g (8.54 mols) of n-butyl acrylate. This block copolymer sample (3) had a number average molecular weight of 44,000.

**PRODUCTION EXAMPLE 4**

273 g (2.63 mols) of styrene was placed in a 4-necked flask equipped with a mechanical stirrer, a nitrogen inlet, a cooling tube and a rubber septum, and 12.3 g (78.8 mmols) of 2,2'-bipyridine was added thereto, then the atmosphere inside the reaction system was replaced with nitrogen. Subsequently, 3.76 g (26.2 mmols) of copper bromide was added thereto in nitrogen atmosphere, and the reaction system was heated to 90°C. 5.54 g (26.2 mmols) of 2-H2MPN was added thereto as a polymerization initiator to initiate polymerization, which was continued for 12 hours at 90 °C in nitrogen atmosphere with no solvents . After confirming that the conversion reached 80 % by weight or more, 1,090 g (8.54 mols) of n-butyl acrylate and 6.78 g (39.4 mmols) of 6-HHA were added through the rubber septum, followed by heating for further 20 hours. The thus obtained polymer product was diluted with ethyl acetate to about 20 % by weight, and the catalyst was removed. Finally, ethyl acetate was distilled off, and the residue was heated (60°C) under reduced pressure to obtain A-B block copolymer sample (4) having hydroxyl groups at one end and at optional positions in the acrylic polymer block B. This block copolymer sample (4) had a number average molecular weight of 48,000.

**PROCUCTION EXAMPLE 5**

273 g (2.63 mols) of styrene was placed in a 4-necked flask equipped with a mechanical stirrer, a nitrogen inlet, a cooling tube and a rubber septum, and 12.3 g (78.8 mmols) of 2,2'-bipyridine was added thereto, then the atmosphere inside the reaction system was replaced with nitrogen. 3.76 g (26.2 mmols) of copper bromide was added thereto in nitrogen atmosphere, and the reaction system was heated to 90°C. Then, 5.54 g (26.2 mmols) of 2-H2MPN was added thereto as a polymerization initiator to initiate polymerization, which was continued for 12 hours at 90 °C in nitrogen atmosphere with no solvents . After confirming that the conversion reached 80 % by weight or more, 1,090 g (8.54 mols) of n-butyl acrylate was added through the rubber septum, followed by conducting polymerization for further 20 hours. The thus obtained polymer product was diluted with ethyl acetate to about 20 % by weight, and the catalyst was removed. Finally, ethyl acetate was distilled off, and the residue was heated (60°C) under reduced pressure to obtain A-B block copolymer sample (5) having a hydroxyl group at only one end of the molecule. This block copolymer sample (5) had a number average molecular weight of 45,000.

**PRODUCTION EXAMPLE 6**

273 g (2.63 mols) of styrene was placed in a 4-necked flask equipped with a mechanical stirrer, a nitrogen inlet, a cooling tube and a rubber septum, and 12.3 g (78.8 mmols) of 2,2'-bipyridine was added thereto, then the atmosphere inside the reaction system was replaced with nitrogen. 3.76 g (26.2 mmols) of copper bromide was added thereto in nitrogen atmosphere, and the reaction system was heated to 90°C. Then, 5.54 g (26.2 mmols) of 2-H2MPN was added thereto as a polymerization initiator to initiate polymerization, which was continued for 12 hours at 90°C in nitrogen atmosphere with no solvents . After confirming that the conversion reached 80 % by weight or more, 818 g (6.41 mols) of n-butyl acrylate was added through the rubber septum, followed by conducting polymerization at 110°C for further 20 hours . After confirming again that the conversion reached 80 % by weight or more, 6.78 g (39.4 mmols) of 6-HHA was added thereto, followed by polymerization for 20 hours. Finally, 273 g (2.63 mols) of styrene was added to the polymerization system through the rubber septum, followed by conducting polymerization at 90°C for 20 hours. The thus obtained polymer product was diluted with ethyl acetate to about 20 % by weight, and the catalyst was removed. Finally, ethyl acetate was distilled off, and the residue was heated (60°C) under reduced pressure to obtain A-B-A block copolymer sample (6) having hydroxyl groups at one end of the molecule and at the terminal position of the acrylic polymer block B. This block copolymer sample (6) had a number average molecular weight of 49,000.

**PRODUCTION EXAMPLE 7**

A-B-A block copolymer sample (7) having hydroxyl groups at one end of the molecule and at the terminal position of the acrylic polymer block B was obtained in the same manner as in Production Example 6 except for changing the amount of added 6-HHA to 26.3 mmols. This block copolymer sample (7) had a number average molecular weight of 46,000.

**PRODUCTION EXAMPLE 8**

A-B-A block copolymer sample (8) having hydroxyl groups at one end of the molecule and at the terminal position of the acrylic polymer block B was obtained in the same manner as in Production Example 6 except for using 1,170 g (6.41 mols) of 2-ethylhexyl acrylate in place of 818 g (6.41 mols) of n-butyl acrylate . This block copolymer

sample (8) had a number average molecular weight of 47,000.

**PRODUCTION EXAMPLE 9**

45.5 g (438 mmols) of styrene was placed in a 4-necked flask equipped with a mechanical stirrer, a nitrogen inlet, a cooling tube and a rubber septum, and 2.05 g (13.1 mmols) of 2,2'-bipyridine was added thereto, then the atmosphere inside the reaction system was replaced with nitrogen. Subsequently, 626 mg (4.36 mmols) of copper bromide was added thereto in nitrogen atmosphere, and the reaction system was heated to 90°C. 923 mg (4.37 mmols) of 2-H2MPN was added thereto as a polymerization initiator to initiate polymerization, which was continued for 12 hours at 90 °C in nitrogen atmosphere with no solvents. After confirming that the conversion reached 80 % by weight or more, 182 g (1,420 mmols) of n-butyl acrylate and 18.2 g (142 mmols) of t-butyl acrylate were added through the rubber septum, followed by heating for further 40 hours. The thus obtained polymer product was diluted with ethyl acetate to about 20 % by weight, and the catalyst was removed. Finally, ethyl acetate was distilled off, and the residue was heated (60°C) under reduced pressure to obtain an oily polymer of A-B block copolymer sample (9). This block copolymer had carboxyl precursor groups (-COO-t-butyl) in the acrylic polymer block B and had a number average molecular weight of 51,000.

**PRODUCTION EXAMPLE 10**

182 g (1,420 mmols) of n-butyl acrylate and 18.2 g (142 mmols) of t-butyl acrylate were placed in a 4-necked flask equipped with a mechanical stirrer, a nitrogen inlet, a cooling tube and a rubber septum, and 2.05 g (13.1 mmols) of 2,2'-bipyridine was added thereto, then the atmosphere inside the reaction system was replaced with nitrogen. Subsequently, 626 mg (4.36 mmols) of copper bromide was added thereto in nitrogen atmosphere, and the reaction system was heated to 90°C. 923 mg (4.37 mmols) of 2-H2MPN was added thereto as a polymerization initiator to initiate polymerization, which was continued for 12 hours at 90°C in nitrogen atmosphere with no solvents . After confirming that the conversion reached 80 % by weight or more, 45.5 g (438 mmols) of styrene was added through the rubber septum, followed by heating for further 40 hours. The thus obtained polymer product was diluted with ethyl acetate to about 20 % by weight, and the catalyst was removed. Finally, ethyl acetate was distilled off, and the residue was heated (60°C) under reduced pressure to obtain an oily polymer of B-A block copolymer sample (10). This block copolymer sample (10) had carboxyl precursor groups (-COO-t-butyl) in the acrylic polymer block B and had a number average molecular weight of 58,100.

**PRODUCTION EXAMPLE 11**

128 g (1,000 mmols) of n-butyl acrylate and 9 g (70 mmols) of t-butyl acrylate were placed in a 4-necked flask equipped with a mechanical stirrer, a nitrogen inlet, a cooling tube and a rubber septum, and 1.08 g (6.91 mmols) of 2,2'-bipyridine was added thereto, then the atmosphere inside the reaction system was replaced with nitrogen. Subsequently, 440 mg (3.06 mmols) of copper bromide was added thereto in nitrogen atmosphere, and the reaction system was heated to 100°C. 550 mg (1.53 mmols) of EBMP was added thereto as a polymerization initiator to initiate polymerization, which was continued for 12 hours at 100°C in nitrogen atmosphere with no solvents. After confirming that the conversion reached 90 % by weight or more, 28.4 g (274 mmols) of styrene was added through the rubber septum, followed by heating for further 20 hours. The thus obtained polymer product was diluted with ethyl acetate to about 20 % by weight, and the catalyst was removed. Finally, ethyl acetate was distilled off, and the residue was heated (60°C) under reduced pressure to obtain an oily polymer of A-B-A block copolymer sample (11). This block copolymer sample (11) had carboxyl precursor groups (-COO-t-butyl) in the acrylic polymer block B and had a number average molecular weight of 98,900.

**EXAMPLE 1**

4 g of A-B block copolymer sample (1) was diluted with 4 ml of ethyl acetate, and 0.4 g of a photoinitiator of 2-(p-methoxyphenyl)-4,6-bis(trichloromethyl)-s-triazine ("TAZ-104" made by Midori Kagaku K.K.) represented by the following general formula and diluted to 10 % by weight with methyl ethyl ketone was added thereto and uniformly mixed to prepare an ultraviolet crosslinking pressure-sensitive adhesive composition.

Then, this adhesive composition was applied to a 27 μm thick polyethylene terephthalate film (hereinafter referred to as PET film) using an applicator having a gap of 100 μm and, after heat-drying at 120°C for 5 minutes, irradiated by a high-pressure mercury lamp at room temperature in an amount of 1.3 J to crosslink and form a 60 μm thick pressure-sensitive adhesive layer, thus a pressure-sensitive adhesive sheet being prepared.

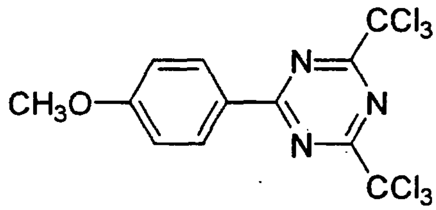

## EXAMPLE 2

Preparation of an ultraviolet crosslinking pressure-sensitive adhesive composition and a pressure-sensitive adhesive sheet was conducted in the same manner as in Example 1 except for changing the amount of "TAZ-104" used as a photoinitiator, to 0.016 g.

## EXAMPLE 3

Preparation of an ultraviolet crosslinking pressure-sensitive adhesive composition and a pressure-sensitive adhesive sheet was conducted in the same manner as in Example 1 except for changing the amount of "TAZ-104" used as a photoinitiator, to 0.008 g.

## EXAMPLE 4

Preparation of an ultraviolet crosslinking pressure-sensitive adhesive composition and a pressure-sensitive adhesive sheet was conducted in the same manner as in Example 1 except for using 4 g of A-B block copolymer sample (2) in place of 4 g of A-B block copolymer sample (1) and changing the amount of "TAZ-104" used as a photoinitiator, to 0.02 g.

## EXAMPLE 5

Preparation of an ultraviolet crosslinking pressure-sensitive adhesive composition and a pressure-sensitive adhesive sheet was conducted in the same manner as in Example 1 except for using 4 g of A-B block copolymer sample (3) in place of 4 g of A-B block copolymer sample (1) and changing the amount of "TAZ-104" used as a photoinitiator, to 0.02 g.

## EXAMPLE 6

Preparation of an ultraviolet crosslinking pressure-sensitive adhesive composition and a pressure-sensitive adhesive sheet was conducted in the same manner as in Example 1 except for using 4 g of A-B block copolymer sample (4) in place of 4 g of A-B block copolymer sample (1) and changing the amount of "TAZ-104" used as a photoinitiator, to 0.02 g.

## EXAMPLE 7

Preparation of an ultraviolet crosslinking pressure-sensitive adhesive composition and a pressure-sensitive adhesive sheet was conducted in the same manner as in Example 1 except for using 4 g of A-B block copolymer sample (5) in place of 4 g of A-B block copolymer sample (1) and changing the amount of "TAZ-104" used as a photoinitiator, to 0.02 g.

## EXAMPLE 8

Preparation of an ultraviolet crosslinking pressure-sensitive adhesive composition and a pressure-sensitive adhesive sheet was conducted in the same manner as in Example 1 except for using 4 g of A-B block copolymer sample (6) in place of 4 g of A-B block copolymer sample (1) and changing the amount of "TAZ-104" used as a photoinitiator, to 0.02 g.

## EXAMPLE 9

Preparation of an ultraviolet crosslinking pressure-sensitive adhesive composition and a pressure-sensitive adhesive sheet was conducted in the same manner as in Example 1 except for using 4 g of A-B-A block copolymer sample (7) in place of 4 g of A-B block copolymer sample (1) and changing the amount of "TAZ-104" used as a photoinitiator, to 0.02 g.

## EXAMPLE 10

Preparation of an ultraviolet crosslinking pressure-sensitive adhesive composition and a pressure-sensitive adhesive sheet was conducted in the same manner as in Example 1 except for using 4 g of A-B-A block copolymer sample (8) in place of 4 g of A-B block copolymer sample (1) and changing the amount of "TAZ-104" used as a photoinitiator, to 0.02 g.

## EXAMPLE 11

The ultraviolet crosslinking pressure-sensitive adhesive composition preared in Example 1 was applied to a 38 μm thick, release-treated PET film using an applicator having a gap of 100 μm, followed by heat-drying at 120°C for 5 minutes to form a pressure-sensitive adhesive layer having a thickness of about 50 μm. Two sheets of the thus prepared film were laminated one over the other with the pressure-sensitive adhesive layers facing to each other. Then, one of the release-treated PET film sheets was peeled off, and an additional sheet having the pressure-sensitive adhesive was laminated on the surface from which the PET film had been peeled off, thus three layers being integrated. Subsequently, the release-treated PET film sheet of the additional sheet was peeled off, and a 27 μm thick PET film was laminated on the PET film-peeled off surface to provide a backing layer. Then, the release-treated PET film sheet on the other side was peeled off to prepare a sheet having a thickness of about 150 μm. This sheet was irradiated with a high-pressure mercury lamp at room temperature in an amount of 2.6 J through a sheet of 38 μm thick PET film to cut lights of not longer than 300 nm in wavelength to a level of substantially 0, to conduct crosslinking treatment. Thus, there was obtained a pressure-sensitive adhesive sheet.

Each of the pressure-sensitive adhesive sheets described in Examples 1 to 11 was subjected to the tests of measuring adhesion and holding power (creep characteristics) according to the following methods . Results thus obtained are shown in Table 1 together with the amount of solvent-soluble matter of pressure-sensitive adhesive layer after ultraviolet crosslinking treatment.

<Adhesion>

A pressure-sensitive adhesive sheet sample was cut into a piece of 20 mm in width and 80 mm in length and, after contact adhering it onto an adherend of a stainless steel plate (SUS-304 plate) or a polypropylene plate (PP plate) of 40 mm in width and 100 mm in length by applying thereto a 2-Kg rubber roller forward and backward once, was left at room temperature for 30 minutes. The sample was then peeled at an angle of 180° at 25°C and at a pulling rate of 300 mm/minute by means of a tensile machine to measure force necessary for the peeling. An average of two samples was determined for each sheet sample.

<Holding Power>

A pressure-sensitive adhesive sheet sample was applied to a bakelite plate in an adhesion area of 10 mm in width and 20 mm in length, and a sliding distance (dropping distance) per hour under a load of 500 g at 40°C was measured. It is generally known that, the smaller the sliding distance, the higher the cohesion.

<Amount of solvent-soluble matter>

About 0.1 g portion of the crosslinked pressure-sensitive adhesive layer was taken out of a pressure-sensitive adhesive sheet, and was wrapped in a microporous Teflon film (weight: Y1), followed by weighing the total (Y2). Then, after dipping it in 50 ml of ethyl acetate for 2 days, it was dried and again weighed (Y3). The amount of solvent-soluble matter (% by weight) of the pressure-sensitive adhesive layer (block copolymer) was determined from these data according to the following formula:

$$\text{Amount of solvent-soluble matter (\% by weight)} = \frac{(Y2-Y1)-(Y3-Y1)}{(Y2-Y1)} \times 100$$

TABLE 1

| | Solvent-Soluble Matter (% by weight) | Adhesion (N/20mm wide) | | Holding Power (Sliding distance) (mm/hr) |
|---|---|---|---|---|
| | | Against SUS Plate | Against PP Plate | |
| Example 1 | 25 | 4.90 | 2.35 | 0.09 |
| Example 2 | 35 | 8.82 | 3.82 | 0.11 |
| Example 3 | 49 | 8.13 | 3.82 | 0.17 |
| Example 4 | 23 | 4.41 | 2.21 | 0.07 |
| Example 5 | 38 | 1.27 | 0.41 | 1.11 |
| Example 6 | 31 | 9.60 | 0.88 | 0.08 |
| Example 7 | 44 | 3.89 | 0.93 | 0.12 |
| Example 8 | 41 | 2.94 | 0.16 | 0.40 |
| Example 9 | 45 | 2.35 | 0.13 | 0.42 |
| Example 10 | 42 | 1.91 | 0.69 | 0.12 |
| Example 11 | 28 | 11.20 | 7.98 | 0.35 |

As is apparent from Table 1, the pressure-sensitive adhesive sheet samples of Examples 1 to 11 obtained by mixing the major component of A-B or A-B-A block copolymer with the trichloromethyl group-containing triazine derivative to constitute an ultraviolet crosslinking pressure-sensitive adhesive composition and crosslinking it, exhibit excellent pressure-sensitive adhesion properties satisfying requirements for adhesion and cohesion. In addition, as with the sample in Example 11, it is seen that cutting ultraviolet of shorter wavelength, which ultraviolet contributes to hardening the surface, by PET film enables one to uniformly crosslink to a deep portion of a sample having a large thickness, providing good results with both adhesion and cohesion.

## EXAMPLE 12

4 g of A-B block copolymer sample (9) having carboxy precursor groups was diluted with 4 ml of butyl acetate, and 1.3 g of $H^+$ ion-exchange resin was added thereto, followed by heating at 120°C for 2 hours under stirring to produce a block copolymer wherein the carboxyl precursor groups were converted to carboxyl groups. After removing the ion-exchange resin by filtration under reduced pressure, 0.4 g of a photoinitiator of 2,4-trichloromethyl-(piperonyl)-6-triazine ("TAZ-PP" manufactured by Nippon Siberhegner Co.) diluted to 10 % by weight with methyl ethyl ketone was added thereto and uniformly mixed to prepare an ultraviolet crosslinking pressure-sensitive adhesive composition. Then, this pressure-sensitive adhesive composition was applied to a 27 μm thick PET film using an applicator having a gap of 100 μm and, after heat-drying at 120°C for 5 minutes, irradiated by a high-pressure mercury lamp at room temperature in an amount of 1.3 J with a 38-μm thick PET film intervening between the light source and the sample, to crosslink and form an about 50 μm thick adhesive layer, thus a pressure-sensitive adhesive sheet being prepared.

## EXAMPLE 13

4 g of A-B block copolymer sample (9) having carboxyl precursor groups was diluted with 4 ml of toluene, and 0.4 g of p-toluenesulfonic acid hydrate was added thereto, followed by heating at 110°C for 2 hours under reflux to produce a block copolymer wherein the carboxyl precursor groups were converted to carboxyl groups. After removing p-toluenesulfonic acid hydrate by filtration under reduced pressure, the copolymer was neutralized with triethylamine, and 0.4 g of the same photoinitiator as used in Example 12 ("TAZ-PP" diluted to 10 % by weight with methyl ethyl ketone) was added to the solution and uniformly mixed to prepare an ultraviolet crosslinking pressure-sensitive adhesive composition. A pressure-sensitive adhesive sheet was prepared in the same manner as in Example 12 except for using this composition.

## EXAMPLE 14

4 g of A-B block copolymer sample (9) having carboxyl precursor groups was diluted with 4 ml of toluene, and 80 mg of a 50 % by weight solution of a photoacid generator of phenyl-(3-hydroxy-pentadecylphenyl)iodonium hexafluoroantimonate in methyl ethyl ketone was added thereto to prepare a solution. This solution was applied to a 27 μm thick PET film using an applicator having a gap of 100 μm and, after heat-drying at 120°C for 5 minutes, irradiated by a high-pressure mercury lamp at room temperature in an amount of 1.3 J, then heat-treated at 130°C for 5 minutes to produce a block copolymer wherein the carboxy precursor groups were converted to carboxyl groups.

Additionally, converion of the carboxyl precursor group to carboxyl group was confirmed through IR. That is, it could be confirmed by checking that, while no absorptions were observed at around 3,400 to 3,000 $cm^{-1}$ before conversion but, after completion of the converion, a broad absorption spectrum and a shoulder absorption spectrum at around 1,720 $cm^{-1}$ due to carboxyl group (-COOH) were observed.

4 g of the thus produced block copolymer sample (9) having carboxyl groups was diluted with 4 ml of ethyl acetate, and 0.4 g of the same photoinitiator as used in Example 12 ("TAZ-PP" diluted to 10 % by weight with methyl ethyl ketone) was added to the solution and uniformly mixed to prepare an ultraviolet crosslinking pressure-sensitive adhesive composition. A pressure-sensitive adhesive sheet was prepared in the same manner as in Example 12 except for using this composition.

## EXAMPLE 15

4 g of A-B block copolymer sample (9) having carboxyl precursor groups was diluted with 4 ml of toluene, and 80 mg of a 50 % by weight solution of a photoacid generator of phenyl-(3-hydroxy-pentadecylphenyl)iodonium hexafluoroantimonate in methyl ethyl ketone, and 0.4 g of the same photoinitiator as used in Example 12 ("TAZ-PP" diluted to 10 % by weight with methyl ethyl ketone) were added thereto to prepare a solution. This solution was applied to a 27 μm thick PET film using an applicator having a gap of 100 μm and, after heat-drying at 120°C for 5 minutes, irradiated by a high-pressure mercury lamp at room temperature in an amount of 1.3 J with a 38 μm thick PET film intervening between the light source and the sample, then heat-treated at 130°C for 5 minutes to form an about 50 μm thick pressure-sensitive adhesive layer in which a block copolymer wherein the carboxy precursor groups were converted to carboxyl groups was produced and crosslinked, thus a pressure-sensitive adhesive sheet being prepared.

## EXAMPLE 16

4 g of A-B block copolymer sample (9) having carboxyl precursor groups was diluted with 4 ml of toluene, and 80 mg of a 50 % by weight solution of a photoacid generator of phenyl-(3-hydroxy-pentadecylphenyl)iodonium hexafluoroantimonate in methyl ethyl ketone, 0.4 g of the same photoinitiator as used in Example 12 ("TAZ-PP" diluted to 10 % by weight with methyl ethyl ketone) and 0.2 g of a 10 % by weight methanol solution of a crosslinking aid of benzophenone were added thereto to prepare a solution . This solution was applied to a 27 μm thick PET film using an applicator having a gap of 120 μm and, after heat-drying at 120°C for 5 minutes, irradiated by a high-pressure mercury lamp at room temperature in an amount of 1.3 J with a 38 μm thick PET film intervening between the light source and the sample, then heat-treated at 130°C for 5 minutes to form an about 50 μm thick pressure-sensitive adhesive layer in which a block copolymer wherein the carboxy precursor groups were converted to carboxyl groups was produced and crosslinked, thus a pressure-sensitive adhesive sheet being prepared.

## EXAMPLE 17

A pressure-sensitive adhesive sheet was prepared in the same manner as in Example 16 except for using 4 g of the B-A block copolymer sample (10) having carboxyl precursor groups in place of 4 g of the A-B block copolymer sample (9) having carboxyl precursor groups.

## EXAMPLE 18

A pressure-sensitive adhesive sheet was prepared in the same manner as in Example 16 except for using 4 g of the A-B-A block copolymer sample (11) having carboxyl precursor groups in place of 4 g of the A-B block copolymer sample (9) having carboxyl precursor groups.

Each of the pressure-sensitive adhesive sheets obtained in Examples 12 to 18 was subjected to measurement

of adhesion and holding power in the same manner as described hereinbefore. Results thus obtained are shown in Table 2.

TABLE 2

| | Adhesion (to stainless steel) (N/20mm in width) | Holding Power (sliding distance) (mm/hr) |
|---|---|---|
| Example 12 | 5.2 | 0.55 |
| Example 13 | 4.1 | 0.87 |
| Example 14 | 3.8 | 0.41 |
| Example 15 | 5.5 | 0.53 |
| Example 16 | 5.9 | 0.29 |
| Example 17 | 6.2 | 0.25 |
| Example 18 | 5.9 | 0.22 |

As is apparent from Table 2, the pressure-sensitive adhesive sheet samples of Examples 12 to 18 obtained by mixing the major component of A-B, B-A or A-B-A block copolymer, which is composed of styrene polymer block A and acrylic polymer block B having carboxyl precursor groups or carboxyl groups formed from the precursor groups, with the trichloromethyl group-containing triazine derivative to constitute an ultraviolet crosslinking pressure-sensitive adhesive composition, converting the carboxyl precursor groups to carboxyl groups in case where the carboxyl precursor group-containing copolymer is used, and crosslinking it exhibit excellent pressure-sensitive adhesion properties satisfying requirements for adhesion and cohesion. In particular, it is seen that extremely good adhesion is obtained because of the presence of carboxyl groups in the block copolymer.

As has been described hereinbefore, the invention can provide an ultraviolet crosslinking pressure-sensitive adhesive composition which shows improved weatherability owing to introduction of acrylic polymer component and exhibit improved pressure-sensitive adhesive characteristics without causing problems with safety or economy as has been encountered in the prior art, and a pressure-sensitive adhesive sheet using the composition. The pressure-sensitive adhesive composition is produced by forming a block copolymer wherein at least one styrenic polymer block A and at least one acrylic polymer block B are bound to each other, for example, A-B, B-A, A-B-A or B-A-B block copolymer according to living radical polymerization process in the absence, or in the presence of a small amount, of a solvent, mixing this as a major component with a trichloromethyl group-containing triazine derivative, and crosslinking the polymer with ultraviolet or, alternatively, by forming a block copolymer having carboxy precursor groups in the acrylic polymer block B as the above-described block copolymer and converting the precursor groups to carboxyl groups.

While the invention has been described in detail and with reference to specific embodiments thereof, it will be apparent to one skilled in the art that various changes and modifications can be made therein without departing from the scope thereof.

## Claims

1. An ultraviolet crosslinking pressure-sensitive adhesive composition, which is produced by mixing a block copolymer (a) wherein at least one styrenic polymer block A and at least one acrylic polymer block B are bound to each other with a triazine derivative (b) containing trichloromethyl group.

2. The ultraviolet crosslinking pressure-sensitive adhesive composition as claimed in claim 1, wherein the block copolymer (a) is an A-B, B-A, A-B-A or B-A-B block copolymer.

3. The ultraviolet crosslinking pressure-sensitive adhesive composition as claimed in claim 1, wherein the block copolymer (a) contains not more than 50 % by weight of the styrenic polymer block A based on the total amount of the block copolymer.

4. The ultraviolet crosslinking pressure-sensitive adhesive composition as claimed in claim 1, wherein the block copolymer (a) contains a hydroxyl group or groups in its polymer chain.

5. The ultraviolet crosslinking pressure-sensitive adhesive composition as claimed in claim 4, wherein the hydroxyl group(s) exist(s) at the end, or in the vicinity of the end, of the polymer chain.

6. The ultraviolet crosslinking pressure-sensitive adhesive composition as claimed in claim 1, wherein the block copolymer (a) contains carboxyl precursor groups in the acrylic polymer block B.

7. The ultraviolet crosslinking pressure-sensitive adhesive composition as claimed in claim 6, wherein the carboxyl precursor groups are converted to carboxyl groups.

8. A process for producing an ultraviolet crosslinking pressure-sensitive adhesive composition, which comprises conducting living radical polymerization of a styrenic monomer and an acrylic monomer in a proper order of the monomers using a polymerization initiator in the presence of a transition metal and its ligand to produce a block copolymer (a) wherein at least one styrenic polymer block A and at least one acrylic polymer block B are bound to each other, and mixing the block copolymer with a triazine derivative (b) containing trichloromethyl group.

9. The process for producing an ultraviolet crosslinking pressure-sensitive adhesive composition as claimed in claim 8, wherein the block copolymer (a) has the carboxyl precursor groups in the acrylic polymer block B, and the carboxyl precursor groups are converted to carboxyl groups, before or after being mixed with the triazine derivative (b) containing trichloromethyl group, by heating in the presence of an acid catalyst.

10. A pressure-sensitive adhesive sheet, which comprises a backing having provided thereon a pressure-sensitive adhesive layer containing not more than 50 % by weight of solvent soluble matter formed by ultraviolet crosslinking the ultraviolet crosslinking pressure-sensitive adhesive composition claimed in claim 1.

11. A process for producing a pressure-sensitive adhesive sheet, which comprises applying to a backing the ultraviolet crosslinking pressure-sensitive adhesive composition claimed in claim 1, and causing crosslinking of the composition by ultraviolet irradiation to form a pressure-sensitive adhesive layer containing not more than 50 % by weight of solvent-soluble matter.

**Patentansprüche**

1. Ultraviolett-vernetzende, druckempfindliche Klebstoffzusammensetzung, die hergestellt ist durch Mischen eines Blockcopolymers (a), bei dem mindestens ein Styrolpolymer-Block A und mindestens ein Acrylpolymer-Block B miteinander verbunden sind, mit einem Triazinderivat (b), das eine Trichlormethylgruppe enthält.

2. Ultraviolett-vernetzende, druckempfindliche Klebstoffzusammensetzung, wie in Anspruch 1 beansprucht, wobei das Blockcopolymer (a) ein A-B, B-A, A-B-A oder B-A-B Blockcopolymer ist.

3. Ultraviolett-vernetzende, druckempfindliche Klebstoffzusammensetzung, wie in Anspruch 1 beansprucht, wobei das Blockcopolymer (a) nicht mehr als 50 Gew.-% des Styrolpolymer-Blocks A, bezogen auf die Gesamtmenge des Blockcopolymers, enthält.

4. Ultraviolett-vernetzende, druckempfindliche Klebstoffzusammensetzung, wie in Anspruch 1 beansprucht, wobei das Blockcopolymer (a) eine Hydroxylgruppe oder Gruppen in seiner Polymerkette enthält.

5. Ultraviolett-vernetzende, druckempfindliche Klebstoffzusammensetzung, wie in Anspruch 4 beansprucht, wobei sich die Hydroxylgruppe(n) am Ende oder in der Nähe des Endes der Polymerkette befindet (befinden).

6. Ultraviolett-vernetzende, druckempfindliche Klebstoffzusammensetzung, wie in Anspruch 1 beansprucht, wobei das Blockcopolymer (a) Carboxyl-Precursorgruppen im Acrylpolymer-Block B enthält.

7. Ultraviolett-vernetzende, druckempfindliche Klebstoffzusammensetzung, wie in Anspruch 6 beansprucht, wobei die Carboxyl-Precursorgruppen zu Carboxylgruppen umgewandelt sind.

8. Verfahren zum Herstellen einer ultraviolett-vernetzenden, druckempfindlichen Klebstoffzusammensetzung, umfassend das Durchführen einer lebenden Radikalpolymerisation eines Styrolmonomers und eines Acrylmonomers in der richtigen Reihenfolge der Monomere, wobei ein Polymerisationsinitiator in der Gegenwart eines Übergangsmetalls und seines Liganden verwendet wird, um ein Blockcopolymer (a) herzustellen, bei dem mindestens ein Styrolpolymer-Block A und mindestens ein Acrylpolymer-Block B miteinander verbunden sind, und Mischen des Blockcopolymers mit einem Triazinderivat (b), das eine Trichlormethylgruppe enthält.

**9.** Verfahren zum Herstellen einer ultraviolett-vernetzenden, druckempfindlichen Klebstoffzusammensetzung, wie in Anspruch 8 beansprucht, wobei das Blockcopolymer (a) die Carboxyl-Precursorgruppen im Acrylpolymer-Block B enthält, und die Carboxyl-Precursorgruppen durch Erhitzen in der Gegenwart eines Säurekatalysators zu Carboxylgruppen umgewandelt werden, vor oder nach dem Mischen mit dem Triazinderivat (b), das eine Trichlormethylgruppe enthält.

**10.** Druckempfindliche Klebefolie, die einen Träger umfasst, auf der sich eine druckempfindliche Klebstoffschicht befindet, die nicht mehr als 50 Gew.-% einer Lösungsmittel-löslichen Substanz enthält, die durch das Ultraviolett-Vernetzen der ultraviolett-vernetzenden, druckempfindlichen Klebstoffzusammensetzung, wie in Anspruch 1 beansprucht, gebildet ist.

**11.** Verfahren zum Herstellen einer druckempfindlichen Klebefolie, umfassend das Aufbringen der ultraviolett-vernetzenden, druckempfindlichen Klebstoffzusammensetzung, wie in Anspruch 1 beansprucht, auf einen Träger, und Vernetzen der Zusammensetzung mittels Ultraviolett-Bestrahlung, um eine druckempfindliche Klebstoffschicht zu bilden, die nicht mehr als 50 Gew.-% einer Lösungsmittellöslichen Substanz enthält.

**Revendications**

**1.** Composition adhésive sensible à la pression réticulable aux ultraviolets qui est produite en mélangeant un copolymère séquencé (a), dans lequel au moins une séquence polymère styrénique A et au moins une séquence polymère acrylique B sont liées l'une à l'autre, avec un dérivé de triazine (b) contenant un groupe trichlorométhyle.

**2.** Composition adhésive sensible à la pression réticulable aux ultraviolets selon la revendication 1, dans laquelle le copolymère séquencé (a) est un copolymère séquence A-B, B-A, A-B-A ou B-A-B.

**3.** Composition adhésive sensible à la pression réticulable aux ultraviolets selon la revendication 1, dans laquelle le copolymère séquencé (a) contient au plus 50 % en poids de la séquence polymère styrénique A rapportés à la quantité totale du copolymère séquencé.

**4.** Composition adhésive sensible à la pression réticulable aux ultraviolets selon la revendication 1, dans laquelle le copolymère séquencé (a) contient un groupe ou des groupes hydroxyle dans sa chaîne polymère.

**5.** Composition adhésive sensible à la pression réticulable aux ultraviolets selon la revendication 4, dans laquelle le (s) groupe(s) hydroxyle existe(nt) à la terminaison ou au voisinage de la terminaison de la chaîne polymère.

**6.** Composition adhésive sensible à la pression réticulable aux ultraviolets selon la revendication 1, dans laquelle le copolymère séquencé (a) contient des groupes précurseurs carboxyle dans la séquence polymère acrylique B.

**7.** Composition adhésive sensible à la pression réticulable aux ultraviolets selon la revendication 6, dans laquelle les groupes précurseurs carboxyle sont convertis en groupes carboxyle.

**8.** Procédé de production d'une composition adhésive sensible à la pression réticulable aux ultraviolets, lequel comprend la réalisation d'une polymérisation radicalaire vivante d'un monomère styrénique et d'un monomère acrylique dans un ordre approprié des monomères en utilisant un initiateur de polymérisation en présence d'un métal de transition et de son ligand pour produire un copolymère séquencé (a), dans lequel au moins une séquence polymère styrénique A et au moins une séquence polymère acrylique B sont liées l'une à l'autre, et le mélange du copolymère séquencé avec un dérivé de triazine (b) contenant un groupe trichlorométhyle.

**9.** Procédé de production d'une composition adhésive sensible à la pression réticulable aux ultraviolets selon la revendication 8, dans lequel le copolymère séquencé (a) présente les groupes précurseurs carboxyle dans la séquence polymère acrylique B, et les groupes précurseurs carboxyle sont convertis en groupes carboxyle avant ou après avoir été mélangés avec le dérivé de triazine (b) contenant un groupe trichlorométhyle, par chauffage en présence d'un catalyseur acide.

**10.** Feuille adhésive sensible à la pression qui comprend un renforcement présentant, fournie sur son dessus, une couche adhésive sensible à la pression contenant au plus 50 % en poids de matière soluble dans un solvant formée par réticulation aux ultraviolets de la composition adhésive sensible à la pression réticulable aux ultraviolets selon

la revendication 1.

11. Procédé de production d'une feuille adhésive sensible à la pression qui comprend l'application sur un renforcement de la composition adhésive sensible à la pression réticulable aux ultraviolets selon la revendication 1 et la réticulation de la composition par irradiation d'ultraviolets pour former une couche adhésive sensible à la pression contenant au plus 50 % en poids de matière soluble dans un solvant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9603302 W, Matyjasewski
- WO 9630421 A


### Non-patent literature cited in the description


- *Polymer Preprinted,* March 1996, 575-576
- **MATYJASEWSKI et al.** Controlled/Living Radical Polymerization. Halogen Atom Transfer Radical Polymerization Promoted by a Cu(I)/Cu(II) Redox Process. *Macromolecules,* 15 October 1995, vol. 28, 7901-7910
- **M.SAWAMOTO et al.** Ruthenium-mediated Living Radical polymerization of Methyl Methacrylate. *Macromolecules,* 1996, vol. 29, 1070